# EUROPEAN PATENT APPLICATION

(11) **EP 4 636 031 A1**
(43) Date of publication of application: **22.10.2025**
(21) Application number: 23903436.6
(22) Date of filing: 08.12.2023
(51) Int. Cl.: C08L 33/00, C08K 3/013, C08K 5/541, C09K 3/10

(54) **CURABLE RESIN COMPOSITION, SEALING AGENT CONTAINING SAME, AND CURED PRODUCT OF SAID CURABLE RESIN COMPOSITION OR SEALING AGENT**

(30) Priority: 14.12.2022 JP 2022199240
(71) Applicant: ThreeBond Co., Ltd., Tokyo 192-0398 (JP)
(72) Inventor: OGASAWARA, Tatsuki, Hachioji-shi, Tokyo 192-0398 (JP); NISHIZAWA, Takuto, Hachioji-shi, Tokyo 192-0398 (JP); TANAKA, Masayuki, Hachioji-shi, Tokyo 192-0398 (JP)
(74) Representative: Crow, Martin
(86) International application number: PCT/JP2023/043962
(87) International publication number: WO 2024/128149

(57) **Abstract**

A means which allows a cured product having high adhesiveness to at least one metal and high resistance to a coolant to be obtained is provided. A curable resin composition containing components (A) to (C): component (A): a polymer which has, as a main chain, a polymer of a monomer containing a (meth)acrylic monomer and which has a hydrolyzable silyl group in its molecule, component (B): an organozinc catalyst, and component (C): a silane-based coupling agent having an epoxy group.

## Description

### TECHNICAL FIELD

The present invention relates to a curable resin composition which enables a cured product having high resistance to an antifreeze liquid (coolant) to be obtained, a sealant containing the same, and a cured product thereof.

### BACKGROUND ART

Japanese Patent Laid-Open No. 2008-274119 describes a photocurable composition having resistance to a antifreeze liquid (coolant). However, if the photocurable composition contains a filler or a color powder, light energy does not reach an interior of the composition and the interior is uncured in some cases. Japanese Patent Laid-Open No. 2008-274119 does not describe any adhesiveness to an adherend, and, if release from the adherend occurs, the function as a sealant is lost.

### SUMMARY OF INVENTION

Conventionally, it has been difficult to realize a curable resin composition which allows a cured product having high adhesiveness to at least one metal and high resistance to a coolant to be obtained.

The present inventors have made intensive studies in order to achieve the above object, and as a result, have discovered a procedure relating to a curable resin composition which enables a cured product having high resistance to a coolant to be obtained, and then have come up to completed the present invention.

The gist of the present invention is in turn described. The present invention includes, for example, the following embodiments.

A first embodiment of the present invention relates to a curable resin composition containing components (A) to (C).

Component (A): a polymer which has, as a main chain, a polymer of a monomer containing a (meth)acrylic monomer and which has a hydrolyzable silyl group in its molecule
Component (B): an organozinc catalyst
Component (C): a silane-based coupling agent having an epoxy group.

A second embodiment of the present invention relates to the curable resin composition according to the first embodiment, wherein the hydrolyzable silyl group in the component (A) is a dialkoxysilyl group.

A third embodiment of the present invention relates the curable resin composition according to the first embodiment or the second embodiment, the composition further containing a coupling agent other than the silane-based coupling agent having an epoxy group.

A fourth embodiment of the present invention relates to the curable resin composition according to the third embodiment, wherein the composition contains 1 to 20 parts by mass of the component (C) and 5 to 25 parts by mass of the coupling agent other than the silane-based coupling agent having an epoxy group, based on 100 parts by mass of the component (A).

A fifth embodiment of the present invention relates to the curable resin composition according to any of the first embodiment to the fourth embodiment, the composition further containing a filler.

A sixth embodiment of the present invention relates to the curable resin composition according to the fifth embodiment, wherein the composition contains 50 to 150 parts by mass of the filler based on 100 parts by mass of the component (A).

A seventh embodiment of the present invention relates to the curable resin composition according to any of the first embodiment to the sixth embodiment, further containing a plasticizer.

An eighth embodiment of the present invention relates to the curable resin composition according to the seventh embodiment, wherein the composition contains 1 to 30 parts by mass of the plasticizer based on 100 parts by mass of the component (A).

A ninth embodiment of the present invention relates to a sealant containing the curable resin composition according to any of the first embodiment to the eighth embodiment.

A tenth embodiment of the present invention relates to a cured product obtained by curing the curable resin composition according to any of the first embodiment to the eighth embodiment or the sealant according to the ninth embodiment.

Herein, the present invention is not limited only to the first embodiment to the tenth embodiment. While the embodiments of the present invention are exemplified above, it is clear that the scope of the present invention is to be interpreted by the accompanying claims.

### DESCRIPTION OF EMBODIMENTS

The detail of the present invention is in turn described. Herein, the present invention is not limited only to the following embodiments, and can be variously modified within the scope of the claims. Embodiments described herein can be arbitrarily combined to serve as any other embodiment.

Herein, "X to Y" representing a range is used to mean inclusion of numerical values (X and Y) as a lower limit value and an upper limit value, and means "X or more and Y or less". Herein, unless particularly noted, operations, and measurement of physical properties and the like are carried out in conditions of room temperature (20°C or more and 25°C or less) and a relative humidity of 40% RH or more and 50% RH or less. Herein, "A and/or B" is meant to include each of A and B, and a combination thereof. Herein, the term "(meth)acrylic" means both acrylic and methacrylic. Herein, the term "(meth)acryloyl" means both acryloyl and methacryloyl.

One aspect of the present invention relates to a curable resin composition containing components (A) to (C).

Component (A): a polymer which has, as a main chain, a polymer of a monomer containing a (meth)acrylic monomer and which has a hydrolyzable silyl group in its molecule
Component (B): an organozinc catalyst
Component (C): a silane-based coupling agent having an epoxy group.

According to the present aspect, there can be provided a curable resin composition which allows a cured product having high adhesiveness to at least one metal and high resistance to a coolant to be obtained.

The component (A) is a polymer which has, as a main chain, a polymer of a monomer containing a (meth)acrylic monomer and which has a hydrolyzable silyl group in its molecule. The component (A) is preferably a polymer which has, as a main chain, a polymer of a monomer containing a (meth)acrylic monomer as a main component and which has a hydrolyzable silyl group in its molecule, more preferably a polymer which has, as a main chain, a polymer of only a (meth)acrylic monomer and which has a hydrolyzable silyl group in its molecule. In other words, the component (A) is a polymer which has, as a main backbone, a partial structure composed of a polymer of a monomer containing a (meth)acrylic monomer and which has one or more hydrolyzable silyl groups in one molecule, preferably a polymer which has, as a main backbone, a (meth)acrylic polymer of a monomer containing a (meth)acrylic monomer as a main component and which has one or more hydrolyzable silyl groups in one molecule (namely, a polymer which has, as a main backbone, a partial structure composed of a polymer of a monomer containing a (meth)acrylic monomer as a main component and which has one or more hydrolyzable silyl groups in one molecule), more preferably a polymer which has, as a main backbone, a partial structure composed of a polymer of only a (meth)acrylic monomer and which has one or more hydrolyzable silyl groups in one molecule. The component (A) may be used singly or in combinations of two or more kinds thereof.

In consideration of reactivity, the component (A) preferably has two or more hydrolyzable silyl groups in its molecule. In other words, the component (A) preferably has two or more hydrolyzable silyl groups in one molecule. The number of hydrolyzable silyl groups in the molecule of the component (A) is not particularly limited. The component (A) preferably has one or two hydrolyzable silyl groups in its molecule, particularly preferably has two hydrolyzable silyl groups in its molecule. The component (A) is preferably a polymer which has, as a main chain, a polymer of a monomer containing a (meth)acrylic monomer and which has two hydrolyzable silyl groups in its molecule from the viewpoint of curability of the composition and plasticity of a cured product. The component (A) is also preferably a combination of a polymer which has, as a main chain, a polymer of a monomer containing a (meth)acrylic monomer and which has one hydrolyzable silyl group in its molecule and a polymer which has, as a main chain, a polymer of a monomer containing a (meth)acrylic monomer and which has two hydrolyzable silyl groups in its molecule, from the same viewpoint. The component (A) has a hydrolyzable silyl group, and the hydrolyzable silyl group may be present in any side chain of the molecule and/or at any end of the molecule, and is preferably present at least at an end of the main chain, more preferably present at both ends of the main chain, in terms of rubber elasticity and plasticity. As described later, the main chain and the hydrolyzable silyl group may be bound via a linking group in the component (A).

The hydrolyzable silyl group is a group which can be crosslinked by formation of a siloxane bond due to the occurrence of condensation reaction. The hydrolyzable silyl group is a functional group having 1 to 3 hydrolyzable groups bound to a silicon atom. Examples of the hydrolyzable group include an alkoxy group, an alkenyloxy group, an acyloxy group, an amino group, an aminooxy group, an oxime group, and an amide group. Examples of the hydrolyzable silyl group include an alkoxysilyl group, an alkenyloxysilyl group, an acyloxysilyl group, an aminosilyl group, an aminooxysilyl group, an oxime silyl group, and an amide silyl group. Herein, the alkoxysilyl group represents a hydrolyzable silyl group in which a hydrolyzable group bound to a silicon atom is an alkoxy group, the alkenyloxysilyl group represents a hydrolyzable silyl group in which a hydrolyzable group bound to a silicon atom is an alkenyloxy group, the acyloxysilyl group represents a hydrolyzable silyl group in which a hydrolyzable group bound to a silicon atom is an acyloxy group, the aminosilyl group represents a hydrolyzable silyl group in which a hydrolyzable group bound to a silicon atom is an amino group, the aminooxysilyl group represents a hydrolyzable silyl group in which a hydrolyzable group bound to a silicon atom is an aminooxy group, the oxime silyl group represents a hydrolyzable silyl group in which a hydrolyzable group bound to a silicon atom is an oxime group, and the amide silyl group represents a hydrolyzable silyl group in which a hydrolyzable group bound to a silicon atom is an amide group. In particular, the alkoxysilyl group is preferred because of easy handling. The hydrolyzable silyl group may be used singly or in combinations of two or more kinds thereof. The hydrolyzable silyl group preferably contains at least one selected from the group consisting of hydrolyzable silyl groups exemplified above. In particular, the hydrolyzable silyl group is preferably the alkoxysilyl group because of easy handling.

The alkoxy group bound to the silicon atom of the alkoxysilyl group is not particularly limited, and is, for example, preferably a linear or branched alkoxy group having 1 to 20 carbon atoms, more preferably a linear or branched alkoxy group having 1 to 8 carbon atoms. Examples of the alkoxy group bound to the silicon atom of the alkoxysilyl group include a methoxy group, an ethoxy group, and a propoxy group. The alkoxy group bound to the silicon atom of the alkoxysilyl group may be used singly or in combinations of two or more kinds thereof. The alkoxy group bound to the silicon atom of the alkoxysilyl group preferably contains at least one selected from the group consisting of functional groups exemplified above. In particular, the alkoxy group bound to the silicon atom of the alkoxysilyl group is particularly preferably a methoxy group. A group other than the alkoxy group may be bound to the silicon atom of the alkoxysilyl group. The group other than the alkoxy group bound to the silicon atom of the alkoxysilyl group is not particularly limited, and examples thereof include a hydrogen atom, an alkyl group, an alkenyl group, and an arylalkyl group. The alkyl group in the group other than the alkoxy group bound to the silicon atom of the alkoxysilyl group is preferably a linear or branched alkyl group having 1 to 20 carbon atoms, more preferably a linear or branched alkyl group having 1 to 8 carbon atoms, further preferably a methyl group, an ethyl group, a propyl group, or an isopropyl group, particularly preferably a methyl group. Herein, the alkyl group bound to the silicon atom of the alkoxysilyl group is not limited thereto. The group other than the alkoxy group bound to the silicon atom of the alkoxysilyl group may be used singly or in combinations of two or more kinds thereof. The group other than the alkoxy group bound to the silicon atom of the alkoxysilyl group preferably contains at least one selected from the group consisting of functional groups exemplified above. In particular, the group other than the alkoxy group bound to the silicon atom of the alkoxysilyl group is preferably a linear or branched alkyl group having 1 to 20 carbon atoms, more preferably a linear or branched alkyl group having 1 to 8 carbon atoms, further preferably a methyl group, an ethyl group, a propyl group or an isopropyl group, particularly preferably a methyl group. Such an alkoxysilyl group is not particularly limited, and examples thereof include a dialkoxysilyl group (for example, alkyldialkoxysilyl group) and a trialkoxysilyl group and more specific examples thereof include a trimethoxysilyl group, a triethoxysilyl group, a triisopropoxysilyl group, a methyldimethoxysilyl group (another name: dimethoxymethylsilyl group), and a methyldiethoxysilyl group (another name: diethoxymethylsilyl group). In particular, a dialkoxysilyl group is preferred, an alkyldialkoxysilyl group is more preferred, and a dimethoxymethylsilyl group is particularly preferred. The alkoxysilyl group may be used singly or in combinations of two or more kinds thereof. The alkoxysilyl group preferably contains at least one selected from the group consisting of functional groups exemplified above. In consideration of reactivity, the hydrolyzable silyl group in the component (A) is preferably a dialkoxysilyl group, more preferably an alkyldialkoxysilyl group, particularly preferably a dimethoxymethylsilyl group.

In one embodiment, the component (A) preferably has two dialkoxysilyl groups in its molecule, more preferably has two alkyldialkoxysilyl groups in its molecule, further preferably has two dimethoxymethylsilyl groups in its molecule.

In the component (A), the main chain (main backbone) and the hydrolyzable silyl group may be bound directly or via a linking group. The component (A) may further have a linking group bound to the main chain and the hydrolyzable silyl group, between the main chain and the hydrolyzable silyl group, or may not have a linking group bound to the main chain and the hydrolyzable silyl group, between the main chain and the hydrolyzable silyl group. The linking group is not particularly limited, and examples thereof include a divalent group. The divalent linking group is not particularly limited, and examples thereof include an alkylene group, a heteroalkylene group, an arylene group, a heteroarylene group, an ether group, an -S- group, an -NR- group, a carbonyl group, and a sulfonyl group; and a group obtained by selecting two or more from the group consisting of these groups and combining one or more with respect to each of these selected groups. R is a hydrogen atom or a hydrocarbon group having 1 to 10 carbon atoms.

A (meth)acrylic monomer, constituting a polymer of a monomer containing a (meth)acrylic monomer as a main backbone (main chain) of the component (A), is not particularly limited, and any of various (meth)acrylic monomers can be used. Herein, the "(meth)acrylic monomer" is a general term of monomers each having an acrylic group (acryloyl group) (H₂C=CH-C(=O)-) or a methacrylic group (methacryloyl group) (H₂C=C(CH₃)-C(=O)-). Examples of a (meth)acrylic monomer include (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, an ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, and 2-perfluorohexadecylethyl (meth)acrylate, but not limited thereto. The (meth)acrylic monomer can be selected and polymerized, and a (meth)acrylic monomer having a hydrocarbon group on a moiety other than a (meth)acryloyl group is preferably selected. The (meth)acrylic monomer may be used singly or in combinations of two or more kinds thereof. The (meth)acrylic monomer preferably contains at least one selected from the group consisting of (meth)acrylic monomers exemplified above, more preferably contains a (meth)acrylic monomer having a hydrocarbon group in a moiety other than a (meth)acryloyl group. In particular, the (meth)acrylic monomer is particularly preferably a (meth)acrylic monomer having a hydrocarbon group in a moiety other than a (meth)acryloyl group.

The proportion of a (meth)acrylic monomer-derived constituent unit present in the polymer of a monomer containing a (meth)acrylic monomer, as the main backbone (main chain), is preferably 50% by mol or more, more preferably 70% by mol or more, further preferably 90% by mol or more, particularly preferably 100% by mol (upper limit 100% by mol), based on the total molar amount of the constituent unit constituting the polymer of a monomer containing a (meth)acrylic monomer. The proportion of the (meth)acrylic monomer-derived constituent unit present in the "polymer of a monomer containing a (meth)acrylic monomer as a main component" is 50% by mol or more based on the total molar amount of the constituent unit constituting the polymer.

The monomer for constituting the polymer of a monomer containing a (meth)acrylic monomer, as the main backbone (main chain), may further contain any other monomer copolymerizable with the (meth)acrylic monomer. In other words, the polymer of a monomer containing a (meth)acrylic monomer, as the main backbone (main chain), may further contain a constituent unit derived from any other monomer copolymerizable with the (meth)acrylic monomer. Any other monomer copolymerizable with the (meth)acrylic monomer is not particularly limited, and examples thereof include an amide group-containing monomer, an amino group-containing monomer, acrylonitrile, styrene, α-methylstyrene, alkyl vinyl ether, vinyl chloride, vinyl acetate, vinyl propionate, and ethylene. The amide group-containing monomer is not particularly limited, and examples thereof include (meth)acrylamide and N-methylol (meth)acrylamide. The amino group-containing monomer is not particularly limited, and examples thereof include aminoethyl vinyl ether.

The number average molecular weight (Mn) of the polymer used as the component (A) is not particularly limited, and is preferably 500 or more, more preferably 3000 or more. The number average molecular weight (Mn) of the polymer used as the component (A) is not particularly limited, and is preferably 100000 or less, more preferably 50000 or less. When the number average molecular weight is 500 or more, elasticity of a cured product of the composition is easily exhibited, and when the number average molecular weight is 100000 or less, stickiness is moderate and stringiness when the composition is discharged for application can be suppressed. The number average molecular weight (Mn) of the polymer used as the component (A) is not particularly limited, and is preferably 500 or more and 100000 or less, more preferably 3000 or more and 50000 or less. The number average molecular weight of the polymer used as the component (A) can be measured by gel permeation chromatography (GPC) with polystyrene as a standard substance.

The viscosity of the polymer used as the component (A) has an influence on the viscosity of the curable resin composition, and therefore is preferably 100 to 1000 Pa·s at 23 to 25°C in consideration of coatability. In other words, the viscosity of the polymer used as the component (A) is preferably 100 Pa·s or more and 1000 Pa·s or less at 23°C or more and 25°C or less. The viscosity of the polymer used as the component (A) is, for example, preferably 100 Pa·s or more and 1000 Pa·s or less at 23°C, more preferably 200 Pa·s or more and 600 Pa·s or less at 23°C, further preferably 250 Pa·s or more and 500 Pa·s or less at 23°C. The viscosity of the polymer used as the component (A) can be measured with an E-type viscometer according to a viscosity measurement method of JIS Z8803: 2011.

The component (A) can be obtained by any of various polymerization methods, and the method is not particularly limited and is preferably a radical polymerization method in terms of general versatility of the monomer and ease of reaction control. The radical polymerization is preferably control radical polymerization, more preferably living radical polymerization, particularly preferably atom transfer radical polymerization. An already known method can be used as the method for introducing the hydrolyzable silyl group into the polymer of a monomer containing a (meth)acrylic monomer, as the main chain, and any method described in, for example, Japanese Patent Laid-Open No. H09-272714 (U.S. Patent No. 5986014) or Japanese Patent Laid-Open No. H11-043512 can be used.

The component (A) used here may be a commercially available product and/or a synthetic product. Specific examples of the component (A) include XMAP series SA110S, SA100S, SA120S, and OR110S manufactured by Kaneka Corporation, but not limited thereto.

The component (B) is an organozinc catalyst. The component (B) may be any one as long as condensation reaction of the hydrolyzable silyl group can be made. The component (B) may be used singly or in combinations of two or more kinds thereof. In one embodiment, the curable resin composition may further contain a component activating the catalyst, together with the component (B).

The organozinc catalyst is not particularly limited. Examples of the organozinc catalyst include an organozinc complex. Specific examples of the organozinc complex include zinc acrylate, zinc acetate, zinc citrate, zinc salicylate, zinc oxalate, zinc adipate, zinc carbamate, zinc phthalocyanine, zinc thiolate, zinc stearate, zinc naphthenate, zinc decanoate, zinc butyrate, zinc neodecanoate, zinc isobutyrate, zinc benzoate, zinc octylate, zinc 2-ethylhexanoate, a zinc-hexacyanocobaltate complex, and a 1-methylimidazole-bis(2-hexanoate) zinc complex, but not limited thereto. The component (B) preferably contains at least one selected from the group consisting of organozinc complexes exemplified above.

A commercially available product and/or a synthetic product may be used for the component (B). Examples of a commercial product (commercially available product) of the component (B) include K-KAT series manufactured by King Industries, Inc., such as 670, XK-648, XK-635, XK-614, and XK-661, but the component (B) is not limited thereto.

The amount of the component (B) added is not particularly limited. The amount of the component (B) added based on 100 parts by mass of the component (A) is preferably 0.01 to 10 parts by mass (0.01 parts by mass or more and 10 parts by mass or less). The amount of the component (B) added based on 100 parts by mass of the component (A) is more preferably 0.01 parts by mass or more and 7 parts by mass or less, the amount of the component (B) added based on 100 parts by mass of the component (A) is further preferably 0.05 parts by mass or more and 7 parts by mass or less, and the amount of the component (B) added based on 100 parts by mass of the component (A) is particularly preferably 0.1 parts by mass or more and 7 parts by mass or less. The content of the component (B) is not particularly limited, and is preferably 0.01 parts by mass or more and 10 parts by mass or less based on 100 parts by mass of the component (A), more preferably 0.01 parts by mass or more and 7 parts by mass or less based on 100 parts by mass of the component (A), further preferably 0.05 parts by mass or more and 7 parts by mass or less based on 100 parts by mass of the component (A), particularly preferably 0.1 parts by mass or more and 7 parts by mass or less based on 100 parts by mass of the component (A). When the amount of the component (B) is 0.01 parts by mass or more based on 100 parts by mass of the component (A), curability is enhanced, and when the amount of the component (B) is 10 parts by mass or less based on 100 parts by mass of the component (A), storage stability is maintained. In a case where two or more kinds of components (A) are used in combination, the amount of the component (A) represents the total amount of two or more kinds of components (A). In a case where two or more kinds of components (B) are used in combination, the amount of the component (B) represents the total amount of two or more kinds of components (B).

The component (C) is a silane-based coupling agent having an epoxy group. Herein, the component (C) excludes the component (A). In other words, the component (C) excludes a polymer which has, as a main chain, a polymer of a monomer containing a (meth)acrylic monomer and which has a hydrolyzable silyl group in its molecule. The silane-based coupling agent (herein, also referred to as "silane coupling agent".) is a compound having one hydrolyzable silyl group in its molecule. The component (C) preferably contains one epoxy group in its molecule. The component (B) and the component (C) can be added to the component (A), to not only allow storage stability of the curable resin composition before curing to be maintained, but also allow a cured product of the curable resin composition to be enhanced in resistance to a coolant. The component (C) may be used singly or in combinations of two or more kinds thereof.

The description of the hydrolyzable silyl group in the component (C) is the same as the description of the hydrolyzable silyl group in the component (A). The hydrolyzable silyl group in the component (C) is not particularly limited, and is preferably an alkoxysilyl group. The alkoxy group bound to the silicon atom of the alkoxysilyl group is not particularly limited, and is, for example, preferably a linear or branched alkoxy group having 1 to 20 carbon atoms, more preferably a linear or branched alkoxy group having 1 to 8 carbon atoms. Examples of the alkoxy group bound to the silicon atom of the alkoxysilyl group include a methoxy group, an ethoxy group, and a propoxy group. The alkoxy group bound to the silicon atom of the alkoxysilyl group may be used singly or in combinations of two or more kinds thereof. The alkoxy group bound to the silicon atom of the alkoxysilyl group preferably contains at least one selected from the group consisting of functional groups exemplified above. In particular, the alkoxy group bound to the silicon atom of the alkoxysilyl group is preferably a methoxy group or an ethoxy group, particularly preferably a methoxy group. A group other than the alkoxy group may be bound to the silicon atom of the alkoxysilyl group. Examples of the group other than the alkoxy group bound to the silicon atom of the alkoxysilyl group include a hydrogen atom, an alkyl group, an alkenyl group, and an arylalkyl group. The alkyl group in the group other than the alkoxy group bound to the silicon atom of the alkoxysilyl group is preferably a linear or branched alkyl group having 1 to 20 carbon atoms, more preferably a linear or branched alkyl group having 1 to 8 carbon atoms, further preferably a methyl group, an ethyl group, a propyl group, or an isopropyl group, particularly preferably a methyl group. Herein, the alkyl group bound to the silicon atom of the alkoxysilyl group is not limited thereto. The group other than the alkoxy group bound to the silicon atom of the alkoxysilyl group may be used singly or in combinations of two or more kinds thereof. The group other than the alkoxy group bound to the silicon atom of the alkoxysilyl group preferably contains at least one selected from the group consisting of functional groups exemplified above. In particular, the group other than the alkoxy group bound to the silicon atom of the alkoxysilyl group is preferably a linear or branched alkyl group having 1 to 20 carbon atoms, more preferably a linear or branched alkyl group having 1 to 8 carbon atoms, further preferably a methyl group, an ethyl group, a propyl group or an isopropyl group, particularly preferably a methyl group. The alkoxysilyl group is not particularly limited, and examples thereof include a dialkoxysilyl group (for example, alkyldialkoxysilyl group) and a trialkoxysilyl group and more specific examples thereof include a trimethoxysilyl group, a triethoxysilyl group, a triisopropoxysilyl group, a methyldimethoxysilyl group (another name: dimethoxymethylsilyl group), and a methyldiethoxysilyl group (another name: diethoxymethylsilyl group). In consideration of reactivity, the alkoxysilyl group is preferably a group selected from the group consisting of groups exemplified above, preferably a trialkoxysilyl group (for example, trimethoxysilyl group) or a dialkoxysilyl group, more preferably a trialkoxysilyl group or an alkyldialkoxysilyl group (for example, methyldiethoxysilyl group), further preferably a trialkoxysilyl group, particularly preferably a trimethoxysilyl group.

Specific examples of the component (C) include 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, and 3-glycidoxypropyltriethoxysilane, but not limited thereto. The component (C) preferably contains at least one selected from the group consisting of compound exemplified above. In particular, the component (C) is more preferably at least one compound selected from the group consisting of 3-glycidoxypropyltrimethoxysilane and 3-glycidoxypropylmethyldiethoxysilane, further preferably 3-glycidoxypropyltrimethoxysilane.

A commercially available product and/or synthetic product may be used as the component (C). Examples of a commercially available product of the component (C) include KBM-303, KBM-402, KBM-403, KBE-402, and KBE-403 manufactured by Shin-Etsu Chemical Co., Ltd., but not limited thereto.

The amount of the component (C) added is not particularly limited. The amount of the component (C) added based on 100 parts by mass of the component (A) is preferably 1 to 20 parts by mass (1 part by mass or more and 20 parts by mass or less). The amount of the component (C) added based on 100 parts by mass of the component (A) is more preferably 1 part by mass or more and 10 parts by mass or less, and the amount of the component (C) added based on 100 parts by mass of the component (A) is further preferably 1 part by mass or more and 8 parts by mass or less. The amount of the component (C) added based on 100 parts by mass of the component (A) is further preferably 1 to 5 parts by mass (1 part by mass or more and 5 parts by mass or less). The amount of the component (C) added based on 100 parts by mass of the component (A) is further preferably 1 part by mass or more and 4 parts by mass or less, and the amount of the component (C) added based on 100 parts by mass of the component (A) is particularly preferably 1 part by mass or more and 3 parts by mass or less. The content of the component (C) is not particularly limited, and is preferably 1 part by mass or more and 20 parts by mass or less, more preferably 1 part by mass or more and 10 parts by mass or less, further preferably 1 part by mass or more and 8 parts by mass or less, further preferably 1 part by mass or more and 5 parts by mass or less, further preferably 1 part by mass or more and 4 parts by mass or less, particularly preferably 1 part by mass or more and 3 parts by mass or less, based on 100 parts by mass of the component (A). When the amount of the component (C) is 1 part by mass or more based on 100 parts by mass of the component (A), toughness is expressed in a cured product to result in an enhancement in tensile shear adhesion strength. When the amount of the component (C) is 20 parts by mass or less based on 100 parts by mass of the component (A), hardness can be lowered. In a case where two or more kinds of components (A) are used in combination, the amount of the component (A) represents the total amount of two or more kinds of components (A). In a case where two or more kinds of components (C) are used in combination, the amount of the component (C) represents the total amount of two or more kinds of components (C).

It is preferable to use the component (C) and a coupling agent other than the component (C) (namely, a coupling agent other than the silane-based coupling agent having an epoxy group) in combination. In a case where the component (C) and the coupling agent other than the silane-based coupling agent having an epoxy group are used in combination, the amount of addition of the coupling agent other than the silane-based coupling agent having an epoxy group is not particularly limited. The total of addition of the component (C) and the coupling agent other than the silane-based coupling agent having an epoxy group, based on 100 parts by mass of the component (A), is preferably 5 parts by mass or more and 45 parts by mass or less. The total of addition of the component (C) and the coupling agent other than the silane-based coupling agent having an epoxy group, based on 100 parts by mass of the component (A), is more preferably 5 to 25 parts by mass (5 parts by mass or more and 25 parts by mass or less). For example, the total of addition of the component (C) and the coupling agent other than the silane-based coupling agent having an epoxy group, based on 100 parts by mass of the component (A), may be 6 parts by mass or more and 45 parts by mass or less. For example, the total of addition of the component (C) and the coupling agent other than the silane-based coupling agent having an epoxy group, based on 100 parts by mass of the component (A), may be 6 parts by mass or more and 25 parts by mass or less. The total of addition of the component (C) and the coupling agent other than the silane-based coupling agent having an epoxy group, based on 100 parts by mass of the component (A), is further preferably 6 parts by mass or more and 20 parts by mass or less. The total of addition of the component (C) and the coupling agent other than the silane-based coupling agent having an epoxy group, based on 100 parts by mass of the component (A), is further preferably 6 parts by mass or more and 16 parts by mass or less. The total of addition of the component (C) and the coupling agent other than the silane-based coupling agent having an epoxy group, based on 100 parts by mass of the component (A), is further preferably 6 parts by mass or more and 13 parts by mass or less. The total of addition of the component (C) and the coupling agent other than the silane-based coupling agent having an epoxy group, based on 100 parts by mass of the component (A), is further preferably 6 parts by mass or more and 10 parts by mass or less. The total of addition of the component (C) and the coupling agent other than the silane-based coupling agent having an epoxy group, based on 100 parts by mass of the component (A), is particularly preferably 6 parts by mass or more and 9 parts by mass or less. The total content of the component (C) and the coupling agent other than the silane-based coupling agent having an epoxy group is not particularly limited. The total content of the component (C) and the coupling agent other than the silane-based coupling agent having an epoxy group is preferably 5 parts by mass or more and 45 parts by mass or less, more preferably 5 parts by mass or more and 25 parts by mass or less, based on 100 parts by mass of the component (A). For example, the total content of the component (C) and the coupling agent other than the silane-based coupling agent having an epoxy group may be 6 parts by mass or more and 45 parts by mass or less based on 100 parts by mass of the component (A), or may be 6 parts by mass or more and 25 parts by mass or less based on 100 parts by mass of the component (A). The total content of the component (C) and the coupling agent other than the silane-based coupling agent having an epoxy group is further preferably 6 parts by mass or more and 20 parts by mass or less, further preferably 6 parts by mass or more and 16 parts by mass or less, further preferably 6 parts by mass or more and 13 parts by mass or less, further preferably 6 parts by mass or more and 10 parts by mass or less, particularly preferably 6 parts by mass or more and 9 parts by mass or less, based on 100 parts by mass of the component (A). A curable resin composition according to one embodiment may contain, for example, 1 part by mass or more and 20 parts by mass or less of the component (C) and 5 parts by mass or more and 25 parts by mass or less of the coupling agent other than the silane-based coupling agent having an epoxy group, based on 100 parts by mass of the component (A). When the total amount of the component (C) and the coupling agent other than the silane-based coupling agent having an epoxy group is 5 parts by mass or more based on 100 parts by mass of the component (A), toughness of a cured product is more expressed to result in an enhancement in tensile shear adhesion strength. When the total amount of the component (C) and the coupling agent other than the silane-based coupling agent having an epoxy group is 45 parts by mass or less, in particular, 25 parts by mass or less, based on 100 parts by mass of the component (A), storage stability can be favorably kept and the hardness of a cured product can be lowered. In a case where two or more kinds of components (A) are used in combination, the amount of the component (A) represents the total amount of two or more kinds of components (A). In a case where two or more kinds of components (C) are used in combination, the amount of the component (C) represents the total amount of two or more kinds of components (C). In a case where two or more kinds of coupling agent other than the silane-based coupling agent having an epoxy group are used in combination, the amount of the coupling agent other than the silane-based coupling agent having an epoxy group represents the total amount of two or more kinds of coupling agents other than the silane-based coupling agent having an epoxy group.

A component other than the components (A) to (C) as essential components (hereinafter, also referred to as "additional component") may be further added in order to adjust these properties to such an extent that properties of the curable resin composition and physical properties of a cured product are not impaired. In other words, a curable resin composition according to one embodiment may further contain the additional component. The additional component is not particularly limited, and examples thereof include a coupling agent other than the silane-based coupling agent having an epoxy group (for example, a silane-based coupling agent other than the component (C), namely, a silane-based coupling agent having no epoxy group), a filler (for example, an inorganic filler, an organic filler), an antioxidant, an anti-aging agent, a plasticizer, a physical property modifier, and a color powder. The additional component may be used singly or in combinations of two or more kinds thereof.

A coupling agent other than the silane-based coupling agent having an epoxy group is preferably further added or a silane-based coupling agent other than the component (C) (namely, silane-based coupling agent having no epoxy group) is more preferably further added to a curable resin composition according to one embodiment. A curable resin composition according to one embodiment preferably further contains a coupling agent other than the silane-based coupling agent having an epoxy group, more preferably further contains a silane-based coupling agent having no epoxy group. Herein, the coupling agent other than the silane-based coupling agent having an epoxy group and the silane-based coupling agent having no epoxy group each exclude the component (A). In other words, the coupling agent other than the silane-based coupling agent having an epoxy group and the silane-based coupling agent having no epoxy group each exclude a polymer which has, as a main chain, a polymer of a monomer containing a (meth)acrylic monomer and which has a hydrolyzable silyl group in its molecule. The coupling agent other than the silane-based coupling agent having an epoxy group may be used singly or in combinations of two or more kinds thereof. The silane-based coupling agent having no epoxy group may be used singly or in combinations of two or more kinds thereof.

The silane-based coupling agent having no epoxy group preferably has an alkyl group and/or a phenyl group in its molecule and does not have a reactive functional group other than the hydrolyzable silyl group in its molecule, from the viewpoint of an enhancement in storage stability. Examples of the reactive functional group other than the hydrolyzable silyl group include an epoxy group, a (meth)acrylic group, and an amino group. The silane-based coupling agent having no epoxy group more preferably has an alkyl group in its molecule and does not have a reactive functional group other than the hydrolyzable silyl group in its molecule, from the same viewpoint. The silane-based coupling agent having no epoxy group preferably contains a silane-based coupling agent having an alkyl group and/or a phenyl group in its molecule and not having a reactive functional group other than the hydrolyzable silyl group in its molecule. The silane-based coupling agent having no epoxy group is more preferably a silane-based coupling agent having an alkyl group and/or a phenyl group in its molecule and not having a reactive functional group other than the hydrolyzable silyl group in its molecule, further preferably a silane-based coupling agent having an alkyl group in its molecule and not having a reactive functional group other than the hydrolyzable silyl group in its molecule.

Specific examples of the silane-based coupling agent having an alkyl group and/or a phenyl group in its molecule and not having a reactive functional group other than the hydrolyzable silyl group in its molecule include methyltrimethoxysilane, methyltriethoxysilane, n-propyltriethoxysilane, and diphenyldimethoxysilane, but not limited thereto. Specific examples of the silane-based coupling agent having no epoxy group include, in addition to these, vinyltrimethoxysilane, but not limited thereto. The silane-based coupling agent having no epoxy group may be used singly or in combinations of two or more kinds thereof. The silane-based coupling agent having no epoxy group preferably contains at least one selected from the group consisting of compounds exemplified above. The silane-based coupling agent having no epoxy group is more preferably at least one selected from the group consisting of methyltrimethoxysilane, methyltriethoxysilane, n-propyltriethoxysilane, vinyltrimethoxysilane and diphenyldimethoxysilane, further preferably at least one selected from the group consisting of methyltrimethoxysilane and diphenyldimethoxysilane, particularly preferably methyltrimethoxysilane.

A commercially available product and/or a synthetic product may be used for the silane-based coupling agent having no epoxy group. A commercially available product of the silane-based coupling agent having no epoxy group is not particularly limited. Examples of the commercially available product of the silane-based coupling agent having no epoxy group include KBM-13 and KBM-202SS manufactured by Shin-Etsu Chemical Co., Ltd.

A filler is preferably further added or an inorganic filler is more preferably further added to a curable resin composition according to one embodiment. A curable resin composition according to one embodiment preferably further contains a filler, more preferably further contains an inorganic filler. The purpose for this is, for example, viscosity adjustment and/or an enhancement in toughness. The filler may be used singly or in combinations of two or more kinds thereof. The inorganic filler may be used singly or in combinations of two or more kinds thereof. The filler is preferably an inorganic filler.

Examples of the inorganic filler include a silica powder (for example, fumed silica powder), a calcium carbonate powder (for example, heavy calcium carbonate powder, light calcium carbonate powder), an alumina powder, and a talc powder, but not limited thereto. Such an inorganic filler may be used singly or in combinations of two or more kinds thereof. The inorganic filler preferably contains at least one selected from the group consisting of inorganic fillers exemplified above. The inorganic filler is more preferably at least one selected from the group consisting of a silica powder, a calcium carbonate powder, an alumina powder and a talc powder, further preferably at least one selected from the group consisting of a silica powder and a calcium carbonate powder, further preferably at least one selected from the group consisting of a fumed silica powder and a calcium carbonate powder, particularly preferably a fumed silica powder and a calcium carbonate powder.

The powder used as the filler may or may not be subjected to a powder surface treatment. The powder used as the inorganic filler may or may not be subjected to a powder surface treatment. Since a powder subjected to a surface treatment is used to result in an enhancement in ease of kneading into the composition, a powder subjected to a surface treatment is more preferably used. The filler is preferably a powder subjected to a surface treatment with a surface treatment agent. The inorganic filler is preferably a powder subjected to a surface treatment with a surface treatment agent. The surface treatment agent is not particularly limited, and examples thereof include a fatty acid such as lauric acid, myristic acid, palmitic acid, or stearic acid; a silane-based coupling agent (silane coupling agent); a silicone compound; a titanium-based coupling agent; or an aluminum-based coupling agent. The surface treatment agent may be used singly or in combinations of two or more kinds thereof. The surface treatment agent preferably contains at least one selected from the group consisting of surface treatment agents exemplified above. The surface treatment agent is more preferably at least one selected from the group consisting of a fatty acid, a silane-based coupling agent, a silicone compound, a titanium-based coupling agent and an aluminum-based coupling agent, further preferably at least one selected from the group consisting of a fatty acid, a silane-based coupling agent and a silicone compound, particularly preferably a fatty acid or dimethylsilicone (another name: polydimethylsiloxane, dimethylpolysiloxane).

The average particle size of the filler is not particularly limited. The average particle size of the filler is preferably 0.001 µm or more and 50 µm or less, more preferably 0.01 µm or more and 10 µm or less. In a case where two or more kinds of fillers are used in combination, the average particle size of the filler represents the average particle size with each of such fillers. The average particle size of the inorganic filler is not particularly limited. The average particle size of the inorganic filler is preferably 0.001 to 50 µm (0.001 µm or more and 50 µm or less), more preferably 0.01 µm or more and 10 µm or less in consideration of nozzle clogging in dispensed coating. In a case where two or more kinds of inorganic fillers are used in combination, the average particle size of the inorganic filler represents the average particle size with each of such inorganic fillers. Examples of the method for measuring the average particle size of the filler and the average particle size of the inorganic filler include observation with an electron microscope, and measurement with a laser diffraction/scattering type measurement apparatus according to a dynamic light scattering method. The average particle size here refers to the average particle size at 50% (median size, D50) measured with a laser diffraction/scattering type measurement apparatus in the case of the order of micrometers, or refers to the average particle size being the arithmetic average of the particle sizes of particles confirmed by observation with an electron microscope in the case of the order of nanometers. The filler is preferably a calcium carbonate powder having an average particle size at 50% of 1 µm or more and 50 µm or less, as measured with a laser diffraction/scattering type measurement apparatus, and a fumed silica powder having an average particle size as the arithmetic average of the particle sizes of particles confirmed by observation with an electron microscope, of 1 nm or more and 100 nm or less, the filler is more preferably a calcium carbonate powder having an average particle size at 50% of 1 µm or more and 10 µm or less, as measured with a laser diffraction/scattering type measurement apparatus, and a fumed silica powder having an average particle size as the arithmetic average of the particle sizes of particles confirmed by observation with an electron microscope, of 1 nm or more and 100 nm or less, or the filler is further preferably a hydrophobic calcium carbonate powder having an average particle size at 50% of 1 µm or more and 10 µm or less, as measured with a laser diffraction/scattering type measurement apparatus, and a hydrophobic fumed silica powder having an average particle size as the arithmetic average of the particle sizes of particles confirmed by observation with an electron microscope, of 1 nm or more and 100 nm or less.

A commercially available product and/or a synthetic product may be used for the filler.

The amount of the filler added is not particularly limited. The amount of the filler added based on 100 parts by mass of the component (A) is preferably 50 parts by mass or more and 150 parts by mass or less. The amount of the filler added based on 100 parts by mass of the component (A) is more preferably 80 parts by mass or more and 150 parts by mass or less. The amount of the filler added based on 100 parts by mass of the component (A) is further preferably 105 parts by mass or more and 150 parts by mass or less. The amount of the filler added based on 100 parts by mass of the component (A) is further preferably 105 parts by mass or more and 120 parts by mass or less. The amount of the filler added based on 100 parts by mass of the component (A) is particularly preferably 105 parts by mass or more and 110 parts by mass or less. The amount of the filler added based on 100 parts by mass of the component (A) may be 50 parts by mass or more and 100 parts by mass or less, the amount of the filler added based on 100 parts by mass of the component (A) may be 50 parts by mass or more and 95 parts by mass or less, or the amount of the filler added based on 100 parts by mass of the component (A) may be 50 parts by mass or more and 90 parts by mass or less. The content of the filler is not particularly limited, and is preferably 50 parts by mass or more and 150 parts by mass or less, more preferably 80 parts by mass or more and 150 parts by mass or less, further preferably 105 parts by mass or more and 150 parts by mass or less, further preferably 105 parts by mass or more and 120 parts by mass or less, particularly preferably 105 parts by mass or more and 110 parts by mass or less, based on 100 parts by mass of the component (A). The content of the filler may be 50 parts by mass or more and 100 parts by mass or less, may be 50 parts by mass or more and 95 parts by mass or less, or may be 50 parts by mass or more and 90 parts by mass or less, based on 100 parts by mass of the component (A). A curable resin composition according to one embodiment preferably contains 50 parts by mass or more and 150 parts by mass or less of the filler based on 100 parts by mass of the component (A). When the amount of the filler is 50 parts by mass or more based on 100 parts by mass of the component (A), a cured product tends to be enhanced in mechanical strength and/or percentage of elongation. When the amount of the filler is 150 parts by mass or less based on 100 parts by mass of the component (A), storage stability is more enhanced. In a case where two or more kinds of components (A) are used in combination, the amount of the component (A) represents the total amount of two or more kinds of components (A). In a case where two or more kinds of fillers are used in combination, the amount of the filler represents the total amount of two or more kinds of fillers.

The amount of the inorganic filler added is not particularly limited. The amount of the inorganic filler added based on 100 parts by mass of the component (A) is preferably 50 to 150 parts by mass (50 parts by mass or more and 150 parts by mass or less). The amount of the inorganic filler added based on 100 parts by mass of the component (A) is more preferably 80 parts by mass or more and 150 parts by mass or less. The amount of the inorganic filler added based on 100 parts by mass of the component (A) is further preferably 105 parts by mass or more and 150 parts by mass or less. The amount of the inorganic filler added based on 100 parts by mass of the component (A) is further preferably 105 parts by mass or more and 120 parts by mass or less. The amount of the inorganic filler added based on 100 parts by mass of the component (A) is particularly preferably 105 parts by mass or more and 110 parts by mass or less. The amount of the inorganic filler added based on 100 parts by mass of the component (A) may be 50 parts by mass or more and 100 parts by mass or less, the amount of the inorganic filler added based on 100 parts by mass of the component (A) may be 50 parts by mass or more and 95 parts by mass or less, or the amount of the inorganic filler added based on 100 parts by mass of the component (A) may be 50 parts by mass or more and 90 parts by mass or less. The content of the inorganic filler is not particularly limited, and is preferably 50 parts by mass or more and 150 parts by mass or less, more preferably 80 parts by mass or more and 150 parts by mass or less, further preferably 105 parts by mass or more and 150 parts by mass or less, further preferably 105 parts by mass or more and 120 parts by mass or less, particularly preferably 105 parts by mass or more and 110 parts by mass or less, based on 100 parts by mass of the component (A). The content of the inorganic filler may be 50 parts by mass or more and 100 parts by mass or less, may be 50 parts by mass or more and 95 parts by mass or less, or may be 50 parts by mass or more and 90 parts by mass or less, based on 100 parts by mass of the component (A). A curable resin composition according to one embodiment more preferably contains 50 parts by mass or more and 150 parts by mass or less of the inorganic filler based on 100 parts by mass of the component (A). When the amount of the inorganic filler is 50 parts by mass or more based on 100 parts by mass of the component (A), a cured product tends to be enhanced in mechanical strength and/or percentage of elongation. When the amount of the inorganic filler is 150 parts by mass or less based on 100 parts by mass of the component (A), storage stability is more enhanced. In a case where two or more kinds of components (A) are used in combination, the amount of the component (A) represents the total amount of two or more kinds of components (A). In a case where two or more kinds of inorganic fillers are used in combination, the amount of the inorganic filler represents the total amount of two or more kinds of inorganic fillers.

The calcium carbonate powder is not particularly limited. Examples of the calcium carbonate powder include a calcium carbonate powder treated with a fatty acid, for the purpose of an enhancement in ease of kneading into the composition. A curable resin composition according to one embodiment preferably contains a calcium carbonate powder treated with a fatty acid (calcium carbonate powder subjected to a surface treatment with a fatty acid). The inorganic filler preferably contains a calcium carbonate powder subjected to a surface treatment with a fatty acid. The calcium carbonate powder is preferably a hydrophobic calcium carbonate powder. The inorganic filler preferably contains a hydrophobic calcium carbonate powder. Examples of the hydrophobic calcium carbonate powder preferably include a calcium carbonate powder subjected to a surface treatment with a fatty acid. The fatty acid used for the surface treatment of the calcium carbonate powder is not particularly limited, and examples thereof include lauric acid, myristic acid, palmitic acid, and stearic acid. Examples of a specific commercial product (commercially available product) of the calcium carbonate powder include Calfine series 200M manufactured by Maruo Calcium Co., Ltd., Softon 1800 manufactured by Shiraishi Calcium Co., Ltd., and NCC#110 manufactured by Nitto Funka Kogyo K.K., but not limited thereto. The calcium carbonate powder may be used singly or in combinations of two or more kinds thereof.

The fumed silica powder is not particularly limited. Examples of the fumed silica powder include a hydrophilic type (hydrophilic fumed silica powder) in which silanol remains on an untreated surface (a surface of an untreated fumed silica powder), and a hydrophobic type (hydrophobic fumed silica powder) obtained by treating silanol (silanol on a surface of a fumed silica powder) with a Si-containing compound (for example, dimethyldichlorosilane, dimethylsilicone (another name: polydimethylsiloxane, dimethylpolysiloxane)) to hydrophobicize a silica surface (a surface of a fumed silica powder), but not limited thereto. The fumed silica powder is preferably a hydrophobic fumed silica powder. The inorganic filler preferably contains a hydrophobic fumed silica powder. The hydrophobic fumed silica powder is preferably a fumed silica powder subjected to a surface treatment with a Si-containing compound, more preferably a fumed silica powder subjected to a surface treatment with a silicone compound, further preferably a fumed silica powder subjected to a surface treatment with dimethylsilicone. A specific commercial product (commercially available product) of the hydrophilic type fumed silica powder (hydrophilic fumed silica powder) is not particularly limited, and examples thereof include AEROSIL (alphabetical notation: AEROSIL) series 90, 130, 150, 200, 255, 300, and 380 manufactured by Nippon Aerosil Co., Ltd. A specific commercial product (commercially available product) of the hydrophobic type fumed silica powder (hydrophobic fumed silica powder) is not particularly limited, and examples thereof include AEROSIL (alphabetical notation: AEROSIL) series R972 (treated with dimethyldichlorosilane), R974 (dimethyldichlorosilane added), R104 (treated with octamethylcyclotetrasiloxane), R106 (treated with octamethylcyclotetrasiloxane), R202 (treated with polydimethylsiloxane), RY200 (treated with polydimethylsiloxane), R805 (treated with octylsilane), R812 (treated with hexamethyldisilazane), R816 (treated with hexadecylsilane), and R711 (treated with methacrylsilane) manufactured by Nippon Aerosil Co., Ltd. Other specific commercial product (commercially available product) is not particularly limited, and examples thereof include CAB-O-SIL series being fumed silica manufactured by Cabot Corporation. The fumed silica powder may be used singly or in combinations of two or more kinds thereof.

It is preferable to use the hydrophobic calcium carbonate powder and the hydrophobic fumed silica powder in combination. A curable resin composition according to one embodiment preferably contains the hydrophobic calcium carbonate powder and the hydrophobic fumed silica powder. The inorganic filler preferably contains the hydrophobic calcium carbonate powder and the hydrophobic fumed silica powder. Here, preferably, the hydrophobic calcium carbonate powder is a calcium carbonate powder subjected to a surface treatment with a fatty acid and the hydrophobic fumed silica powder is a fumed silica powder subjected to a surface treatment with a Si-containing compound. More preferably, the hydrophobic calcium carbonate powder is a calcium carbonate powder subjected to a surface treatment with a fatty acid and the hydrophobic fumed silica powder is a fumed silica powder subjected to a surface treatment with a silicone compound. Further preferably, the hydrophobic calcium carbonate is a calcium carbonate powder subjected to a surface treatment with a fatty acid and the hydrophobic fumed silica powder is a fumed silica powder subjected to a surface treatment with dimethylsilicone. The mass ratio of addition of the hydrophobic calcium carbonate powder and the hydrophobic fumed silica powder is not particularly limited. The mass ratio of addition of the hydrophobic calcium carbonate powder and the hydrophobic fumed silica powder preferably satisfies hydrophobic calcium carbonate powder : hydrophobic fumed silica powder = 50:50 to 95:5, more preferably satisfies hydrophobic calcium carbonate powder : hydrophobic fumed silica powder = 50:50 to 90:10, further preferably satisfies hydrophobic calcium carbonate powder : hydrophobic fumed silica powder = 75:25 to 90:10, further preferably satisfies hydrophobic calcium carbonate powder : hydrophobic fumed silica powder = 80:20 to 90:10, particularly preferably satisfies hydrophobic calcium carbonate powder : hydrophobic fumed silica powder = 80:20 to 85:15. The content ratio of the hydrophobic calcium carbonate powder and the hydrophobic fumed silica powder is not particularly limited. The content ratio of the hydrophobic calcium carbonate powder and the hydrophobic fumed silica powder preferably satisfies hydrophobic calcium carbonate powder : hydrophobic fumed silica powder = 50:50 to 95:5 on the mass ratio, more preferably satisfies hydrophobic calcium carbonate powder : hydrophobic fumed silica powder = 50:50 to 90:10 on the mass ratio, further preferably satisfies hydrophobic calcium carbonate powder : hydrophobic fumed silica powder = 75:25 to 90:10 on the mass ratio, further preferably satisfies hydrophobic calcium carbonate powder : hydrophobic fumed silica powder = 80:20 to 90:10 on the mass ratio, particularly preferably satisfies hydrophobic calcium carbonate powder : hydrophobic fumed silica powder = 80:20 to 85:15 on the mass ratio. In a case where two or more kinds of hydrophobic calcium carbonate powders are used in combination, the amount of the hydrophobic calcium carbonate powder represents the total amount of two or more kinds of hydrophobic calcium carbonate powders. In a case where two or more kinds of hydrophobic fumed silica powders are used in combination, the amount of the hydrophobic fumed silica powder represents the total amount of two or more kinds of hydrophobic fumed silica powders.

An antioxidant may be further added to a curable resin composition according to one embodiment. A curable resin composition according to one embodiment may further contain an antioxidant, or may further contain no antioxidant, and preferably further contains an antioxidant. The purpose for this is, for example, prevention of degradation of a cured product due to an external environment. The antioxidant may be used singly or in combinations of two or more kinds thereof. The antioxidant is preferably liquid at 25°C. Examples of the antioxidant include a phenol-based antioxidant, a thioether-based antioxidant, a phosphorus-based antioxidant, and a nitroxide-based antioxidant, but the type of the antioxidant is not limited thereto. The antioxidant is preferably a thioether-based antioxidant in consideration of resistance to a coolant. Such an antioxidant may be used singly or in combinations of two or more kinds thereof. The antioxidant preferably contains at least one selected from the group consisting of antioxidants exemplified above. The antioxidant is preferably a thioether-based antioxidant, more preferably a thioether-based antioxidant which is liquid at 25°C. A commercially available product and/or a synthetic product may be used for the antioxidant. A commercially available product of the antioxidant is not particularly limited. Examples of the commercially available product of the antioxidant include ADK STAB AO-26 manufactured by ADEKA Corporation.

The amount of the antioxidant added is not particularly limited. The amount of the antioxidant added based on 100 parts by mass of the component (A) is preferably 0.1 to 5.0 parts by mass (0.1 parts by mass or more and 5.0 parts by mass or less). The amount of the antioxidant added based on 100 parts by mass of the component (A) is more preferably 0.5 parts by mass or more and 4.0 parts by mass or less. The amount of the antioxidant added based on 100 parts by mass of the component (A) is further preferably 1.0 part by mass or more and 3.0 parts by mass or less. The content of the antioxidant is not particularly limited, and is preferably 0.1 parts by mass or more and 5.0 parts by mass or less, more preferably 0.5 parts by mass or more and 4.0 parts by mass or less, further preferably 1.0 part by mass or more and 3.0 parts by mass or less, based on 100 parts by mass of the component (A). In a case where two or more kinds of components (A) are used in combination, the amount of the component (A) represents the total amount of two or more kinds of components (A). In a case where two or more kinds of antioxidants are used in combination, the amount of the antioxidant represents the total amount of two or more kinds of antioxidants. The viscosity at 25°C of the antioxidant is not particularly limited, and is preferably 100 mPa·s or more and 10000 mPa·s or less, more preferably 100 mPa·s or more and 7000 mPa·s or less, further preferably 100 mPa·s or more and 5000 mPa·s or less.

A plasticizer may be further added to a curable resin composition according to one embodiment. A curable resin composition according to one embodiment may or may not contain further a plasticizer, and preferably further contains a plasticizer. The purpose for this is, for example, to impart plasticity and flexibility to a cured product. The plasticizer may be used singly or in combinations of two or more kinds thereof. The plasticizer may be liquid at 25°C. The plasticizer preferably contains a plasticizer which is liquid at 25°C. The plasticizer is not particularly limited as long as it is comparable with the component (A). Specific examples of the plasticizer include propylene carbonate, DOS (di-2-ethylhexyl sebacate), DOP (dioctyl phthalate), DINP (diisononyl phthalate), DIDP (diisodecyl phthalate), DBP (dibutyl phthalate), DMS (dimethyl sebacate), DOA (dioctyl adipate), DINA (diisononyl adipate), TCP (tricresyl phosphate), and a (meth)acrylic polymer, but the plasticizer is not limited thereto. These may be used singly or in combinations of two or more kinds thereof. The plasticizer preferably contains at least one compound selected from the group consisting of compounds exemplified above. The plasticizer is more preferably at least one compound selected from the group consisting of propylene carbonate, DOS (di-2-ethylhexyl sebacate), DOP (dioctyl phthalate), DINP (diisononyl phthalate), DIDP (diisodecyl phthalate), DBP (dibutyl phthalate), DMS (dimethyl sebacate), DOA (dioctyl adipate), DINA (diisononyl adipate), TCP (tricresyl phosphate) and a (meth)acrylic polymer, further preferably at least one compound selected from the group consisting of propylene carbonate, DOS (di-2-ethylhexyl sebacate), DOP (dioctyl phthalate), DINP (diisononyl phthalate), DIDP (diisodecyl phthalate), DBP (dibutyl phthalate), DMS (dimethyl sebacate), DOA (dioctyl adipate), DINA (diisononyl adipate) and TCP (tricresyl phosphate), particularly preferably DMS (dimethyl sebacate). The (meth)acrylic polymer as the plasticizer excludes the component (A). In other words, the (meth)acrylic polymer as the plasticizer excludes a polymer which has, as a main chain, a polymer of a monomer containing a (meth)acrylic monomer and which has a hydrolyzable silyl group in its molecule. The (meth)acrylic polymer as the plasticizer is not particularly limited, and examples thereof include a (meth)acrylic polymer which is liquid at 25°C.

The (meth)acrylic polymer as the plasticizer may be added to result in an enhancement in plasticity. The (meth)acrylic polymer as the plasticizer is preferably used in combination with other plasticizer. The (meth)acrylic polymer as the plasticizer preferably does not contain a functional group having polarity and/or a reactive functional group (herein, "not containing a functional group having polarity and/or a reactive functional group" is also referred to as "non-functional group type".). Examples of the functional group having polarity include a hydroxyl group and a carboxyl group, but the functional group having polarity is not limited thereto. Examples of the reactive functional group include an epoxy group and a hydrolyzable silyl group, but the reactive functional group is not limited thereto. The monomer for constituting the (meth)acrylic polymer as the plasticizer contains a (meth)acrylic monomer. The (meth)acrylic polymer as the plasticizer contains a (meth)acrylic monomer-derived constituent unit. The proportion of the (meth)acrylic monomer-derived constituent unit present in the (meth)acrylic polymer is preferably 50% by mol or more, more preferably 70% by mol or more, further preferably 90% by mol or more, particularly preferably 100% by mol (upper limit 100% by mol), based on the total molar amount of the constituent unit constituting the (meth)acrylic polymer. The (meth)acrylic polymer as the plasticizer is particularly preferably a homopolymer of the (meth)acrylic monomer. The monomer for constituting the (meth)acrylic polymer as the plasticizer may further contain other monomer copolymerizable with the (meth)acrylic monomer. The (meth)acrylic polymer as the plasticizer may further contain a constituent unit derived from other monomer copolymerizable with the (meth)acrylic monomer. The (meth)acrylic monomer is not particularly limited. Other monomer copolymerizable with the (meth)acrylic monomer is not particularly limited. Examples of each of the (meth)acrylic monomer and other monomer copolymerizable with the (meth)acrylic monomer include the same as those exemplified in the description of the component (A). The weight average molecular weight (Mw) of the (meth)acrylic polymer as the plasticizer is preferably 1000 or more and 10000 or less. The weight average molecular weight (Mw) of the (meth)acrylic polymer as the plasticizer can be measured by, for example, gel permeation chromatography (GPC) with polystyrene as a standard substance. The viscosity at 25°C of the (meth)acrylic polymer as the plasticizer is not particularly limited, and is preferably 100 to 10000 mPa·s, more preferably 100 to 5000 mPa·s. When the viscosity at 25°C of the (meth)acrylic polymer as the plasticizer is 100 mPa·s or more, the plasticizer is further less likely to bleed out from a cured product , and when the viscosity at 25°C of the (meth)acrylic polymer as the plasticizer is 10000 mPa·s or less, compatibility of the plasticizer and other component is more favorable.

The content of the plasticizer is not particularly limited. A curable resin composition according to one embodiment preferably contains 1 to 30 parts by mass of the plasticizer based on 100 parts by mass of the component (A), from the viewpoint of a decrease in hardness of a cured product. The content of the plasticizer is preferably 1 part by mass or more and 30 parts by mass or less, more preferably 1 part by mass or more and 10 parts by mass or less, further preferably 1 part by mass or more and 5 parts by mass or less, particularly preferably 2 parts by mass or more and 5 parts by mass or less, based on 100 parts by mass of the component (A). The amount of the plasticizer added is not particularly limited. The amount of the plasticizer added based on 100 parts by mass of the component (A) is preferably 1 part by mass or more and 30 parts by mass or less. The amount of the plasticizer added based on 100 parts by mass of the component (A) is more preferably 1 part by mass or more and 10 parts by mass or less. The amount of the plasticizer added based on 100 parts by mass of the component (A) is further preferably 1 part by mass or more and 5 parts by mass or less. The amount of the plasticizer added based on 100 parts by mass of the component (A) is particularly preferably 2 parts by mass or more and 5 parts by mass or less. In a case where two or more kinds of components (A) are used in combination, the amount of the component (A) represents the total amount of two or more kinds of components (A). In a case where two or more kinds of plasticizers are used in combination, the amount of the plasticizer represents the total amount of two or more kinds of plasticizers.

A commercially available product and/or a synthetic product may be used for the plasticizer. Examples of a commercially available product of the plasticizer include DMS manufactured by Hokoku Corporation, Sanso Cizer series manufactured by New Japan Chemical Co., Ltd., such as DOS, DOA, DOP, DINP, and DIDP, ARUFON (alphabetical notation: ARUFON) (registered trademark) series manufactured by Toagosei Co., Ltd., such as UP-1000, UP-1020, UP-1021, UP-1061, UP-1110, and UP-1170, but not limited thereto.

The percentage of change in viscosity of a curable resin composition according to one embodiment is not particularly limited. The percentage of change in viscosity, as measured and calculated by the following method (1), is not particularly limited, and is preferably less than 100%. The initial viscosity, as measured and calculated by the following method (1), is not particularly limited, and is preferably 400 Pa·s or less, more preferably 300 Pa·s or less. The viscosity after leaving to stand is not particularly limited, and is preferably less than 800 Pa·s, more preferably 600 Pa·s or less, further preferably less than 600 Pa·s. The percentage of change in viscosity, as measured and calculated by the following method (2), is not particularly limited, and is preferably less than 100%.

Method (1): The viscosity of the curable resin composition is measured at 23°C with a desktop capillary rheometer viscometer (RH2000) manufactured by NETZSCH Japan K.K., and the resulting value is defined as the "initial viscosity (Pa·s)". The curable resin composition is placed in a plastic container and left to stand in a hot air drying furnace set in an atmosphere at 70°C, for 5 days, the container is taken out from the hot air drying furnace and left to stand at 23°C for 2 hours, thereafter the viscosity of the curable resin composition is measured at 23°C by the same method as in measurement of the "initial viscosity (Pa·s)" in the method (1), and the resulting value is defined as the "viscosity after leaving to stand (Pa.s)". Calculation is performed by a calculation formula "Percentage of change (%)" = (Viscosity after leaving to stand - Initial viscosity)/Initial viscosity × 100, and thus the percentage of change in viscosity is calculated. The details of measurement conditions in viscosity measurement with a desktop capillary rheometer viscometer (RH2000) manufactured by NETZSCH Japan K.K., are described in Examples.

Method (2): The viscosity of the curable resin composition is measured at 25°C with a TV-33 model viscometer (EHD model) manufactured by Tokisangyo, and the resulting value is defined as the "initial viscosity (Pa.s)". The curable resin composition is placed in a plastic container and left to stand in a hot air drying furnace set in an atmosphere at 70°C, for 5 days, the container is taken out from the hot air drying furnace and left to stand at 25°C for 1 hour, thereafter the viscosity of the curable resin composition is measured at 25°C by the same method as in measurement of the "initial viscosity (Pa·s)" in the method (2), and the resulting value is defined as the "viscosity after leaving to stand (Pa.s)". Calculation is performed by a calculation formula "Percentage of change (%)" = (Viscosity after leaving to stand - Initial viscosity)/Initial viscosity × 100, and thus the percentage of change in viscosity is calculated. The details of measurement conditions in viscosity measurement with a TV-33 model viscometer (EHD model) manufactured by Tokisangyo are described in Examples.

A curable resin composition according to one embodiment can be used in the form of a one-liquid system in which each of the components is fully contained, or a two-liquid system in which each of the components is divided to two portions and subsequently mixed to provide one liquid. A curable resin composition according to one embodiment can be produced by mixing each of the components. Accordingly, another embodiment of the present invention can also be said to relate to a method for producing a curable resin composition, the method including mixing the components (A) to (C). The mixing method and mixing conditions are each not particularly limited. The mixing method and mixing conditions are each not particularly limited. In the case of a two-liquid system in which each of the components is divided to two portions and subsequently mixed to provide one liquid, a component for constituting each liquid agent may be mixed to produce such each liquid agent. In the case of the two-liquid system, it is preferable that the component (A) be divided into two liquid agents and the component (B) be added to one of such liquid agents and the component (C) be added to the other thereof. In the case of the two-liquid system, the filler, the plasticizer and the antioxidant as the additional components may be contained in two liquid agents or only in one liquid agent. Any additional component other than these may also be contained in two liquid agents or only in one liquid agent. Curing conditions of a curable resin composition according to one embodiment are varied depending on the composition of the curable resin composition, and is not particularly limited as long as the curable composition can be sufficiently cured. The curing method may be, for example, leaving to stand under an atmosphere at 20 to 27°C × 30 to 70% RH or leaving to stand under an atmosphere at 30 to 100°C in any case of the one-liquid system and the two-liquid system, and the curing time may be, for example, 10 minutes to 10 days in any case of the one-liquid system and the two-liquid system. Curing conditions of a curable resin composition according to one embodiment is, for example, preferably leaving to stand under an atmosphere at 20°C or more and 27°C or less and 30% RH or more and 70% RH or less for 3 hours or more and 10 days or less, more preferably leaving to stand under an atmosphere at 20°C or more and 27°C or less and 30% RH or more and 70% RH or less for 5 hours or more and 10 days or less, further preferably leaving to stand under an atmosphere at 20°C or more and 27°C or less and 30% RH or more and 70% RH or less for 6 days or more and 10 days or less, further preferably leaving to stand under an atmosphere at 20°C or more and 27°C or less and 30% RH or more and 70% RH or less for 7 days or more and 10 days or less, particularly preferably leaving to stand under an atmosphere at 20°C or more and 27°C or less and 50% RH or more and 70% RH or less for 7 days or more and 10 days or less, in any case of the one-liquid system and the two-liquid system. Accordingly, another aspect of the present invention can also be said to relate to a cured product obtained by curing the curable resin composition according to the above aspect or a sealant according to an aspect described below. Another aspect of the present invention can also be said to relate to a method for producing a cured product, the method including curing the curable resin composition according to the above aspect, producing a curable resin composition by the production method according to the above aspect and curing the resulting curable resin composition, or curing a sealant according to an aspect described below. According to these aspects, there can be provided a cured product having high adhesiveness to at least one metal and high resistance to a coolant.

In one embodiment, the hardness of a cured product obtained by curing the curable resin composition is not particularly limited, and is preferably A40 or less, more preferably A35 or less, further preferably A30 or less, particularly preferably A25 or less. The hardness of a cured product obtained by curing the curable resin composition can be measured as follows. The curable resin composition is applied to a mold having a thickness of 1 mm and left to stand under an atmosphere at 23°C and 50% RH for 7 days to produce a cured product, and six of the resulting sheet-shaped cured products are stacked to produce a layered product. A durometer hardness tester (JIS-A) is used to push a hardness meter toward the resulting layered product at a pressure applied of 10 N, thereby measuring the maximum value of the hardness as "hardness (unit: none)". The detail of the hardness of the cured product is according to JIS K 6249: 2003.

In one embodiment, the tensile strength of a cured product obtained by curing the curable resin composition is not particularly limited, and is preferably 1.0 MPa or more, more preferably 1.2 MPa or more, further preferably 1.3 MPa or more, particularly preferably 1.4 MPa or more. The percentage of elongation of a cured product according to one embodiment is not particularly limited, and is preferably 150% or more, more preferably 200% or more, further preferably 240% or more, particularly preferably 280% or more. The tensile strength of a cured product obtained by curing the curable resin composition and the percentage of elongation of the curing rate obtained by curing the curable resin composition can be measured as follows. The curable resin composition is applied to a mold having a thickness of 1 mm and left to stand under an atmosphere at 23°C and 50% RH for 7 days to produce a cured product, and a test piece of a shape of dumbbell No. 5 is cut out from the resulting sheet-shaped cured product. The test piece is pulled at 500 mm/min by a tensile tester at a distance between baselines of 25 mm, and the distance between baselines until breakage of the dumbbell is measured. Calculation is performed by a calculation formula (Distance between baselines at breakage - Initial distance between baselines)/Initial distance between baselines × 100, thereby not only calculating the "percentage of elongation (%)", but also calculating the "tensile strength (MPa)" from the maximum strength of the dumbbell. The detail of the measurement method is according to JIS K 6249: 2003.

In one embodiment, a cured product obtained by curing the curable resin composition preferably has high adhesiveness to an adherend, and preferably has high adhesiveness to a metal such as aluminum. In one embodiment, a cured product obtained by curing the curable resin composition preferably has high adhesiveness to a material containing at least one metal, more preferably has high adhesiveness to aluminum or an aluminum alloy, further preferably has high adhesiveness to aluminum. In one embodiment, a cured product obtained by curing the curable resin composition is preferably used for adhesion between adherends each having a surface composed of a material containing at least one metal, more preferably used for adhesion between adherends each having a surface composed of aluminum or an aluminum alloy, further preferably used for adhesion between adherends each having a surface composed of aluminum. Adherends can adhere to each other by a cured product obtained by curing the curable resin composition.

In one embodiment, the initial tensile shear adhesion strength of a cured product obtained by curing the curable resin composition, to a material containing at least one metal, is not particularly limited, and is preferably 0.7 MPa or more, more preferably 0.9 MPa or more, further preferably 1.0 MPa or more, particularly preferably 1.1 MPa or more. The material containing at least one metal is preferably aluminum or an aluminum alloy, more preferably aluminum. In one embodiment, the tensile shear adhesion strength after immersion of a cured product obtained by curing the curable resin composition, to a material containing at least one metal, is not particularly limited, and is preferably 0.7 MPa or more, more preferably 1.0 MPa or more, further preferably 1.1 MPa or more, further preferably 1.2 MPa or more, particularly preferably 1.3 MPa or more. The material containing at least one metal is preferably aluminum or an aluminum alloy, more preferably aluminum. The initial tensile shear adhesion strength of the cured product and the tensile shear adhesion strength after immersion of the cured product to the coolant can be measured as follows. A metallic member (preferably made of aluminum or an aluminum alloy, more preferably made of aluminum) of 25 mm width × 100 mm length × 1 mm thickness is prepared, and two such members are attached and fixed to each other at an adhesion area of 10 mm × 25 mm (clearance 1 mm) by the curable resin composition, to produce a test piece before curing. The test piece before curing is left to stand under an atmosphere at 23°C and 50% RH for 7 days to cure the curable resin composition in the teat piece before curing, thereby producing a test piece. The test piece is pulled at 50 mm/min by a tensile tester, and the "initial tensile shear adhesion strength (MPa)" is calculated from the resulting maximum strength. The detail of the measurement method is according to JIS K 6249: 2003. The test piece which is in the state of being immersed in an aqueous solution containing 50% by volume of Toyota genuine Super Longlife Coolant (another name: Super LLC) handled by dealers of Toyota Motor Corporation is left to stand at 120°C for 240 hours. Thereafter, the test piece is taken out and the immersion liquid is wiped off, and the test piece is left to stand at 23°C for 2 hours, and thereafter the tensile shear adhesion strength is measured by the same method as in measurement of "initial tensile shear adhesion strength (MPa)", to calculate the "tensile shear adhesion strength after immersion (MPa)" from the resulting maximum strength.

A chemical product such as LLC (registered trademark) is contained in cooling water circulated in a water-cooled radiator in an in-vehicle application. The cooling water is called antifreeze liquid, radiator liquid, coolant, or the like. While a conventional sealant has been feared to cause degradation of sealability by such as degradation of a cured product by cooling water and thus to cause leakage of the cooling water by release of an adherend from such a cured product, a cured product obtained by curing the curable composition according to the above aspect has resistance to a coolant and is suitable for an application of sealing cooling water. Thus, another aspect of the present invention relates to a sealant containing the curable resin composition according to the above aspect. Another aspect of the present invention relates to a method for producing a sealant containing the curable resin composition, the method including producing the curable resin composition by the production method according to the above aspect. According to these aspects, there can be provided a sealant which allows a cured product having high adhesiveness to at least one metal and high resistance to a coolant to be obtained.

According to each aspect of the present invention, there is provided a means which enables a cured product having high adhesiveness to at least one metal and high resistance to a coolant to be obtained. According to a preferred particular embodiment, there can be provided a curable composition having favorable storage stability, and there is provided a means which enables a cured product having high adhesiveness to at least one metal and high resistance to a coolant to be obtained.

While embodiments of the present invention are described in detail, it is clear that these are illustrative and exemplary and are not limitative and the scope of the present invention is to be interpreted by the accompanying claims.

### Examples

Next, the present invention is described in further detail with reference to Examples, but the present invention is not limited to only these Examples. Hereinafter, the curable resin composition is also simply called "composition".

### [Examples 1 to 14 and Comparative Examples 1 to 9]

The following components were provided for preparing a curable resin composition.

### <Component (A): polymer having, as main chain, polymer of monomer containing (meth)acrylic monomer and having hydrolyzable silyl group in its molecule>

· Polymer having, as main chain, polymer of monomer containing (meth)acrylic monomer and having two dimethoxymethylsilyl groups in its molecule (XMAP SA110S, manufactured by Kaneka Corporation, viscosity 500 Pa·s(23°C)),
· Polymer having, as main chain, polymer of monomer containing (meth)acrylic monomer and having two dimethoxymethylsilyl groups in its molecule (XMAP SA100S, manufactured by Kaneka Corporation, viscosity 250 Pa·s(23°C)).

### <Component (B): organozinc catalyst>

· Zinc complex (K-KAT 670 manufactured by King Industries, Inc.).

### <Component (B'): organometallic catalyst other than component (B)>

· Titanium diisopropoxybis(ethylacetoacetate) (Orgatix TC-750, manufactured by Matsumoto Fine Chemical Co., Ltd.).

### <Component (C): silane-based coupling agent having epoxy group>

· 3-Glycidoxypropyltrimethoxysilane (KBM-403, manufactured by Shin-Etsu Chemical Co., Ltd.),
· 3-Glycidoxypropylmethyldiethoxysilane (KBE-402, manufactured by Shin-Etsu Chemical Co., Ltd.).

### <Silane-based coupling agent having no epoxy group>

· N-2-(aminoethyl)-3-aminopropyltrimethoxysilane (KBM-603, manufactured by Shin-Etsu Chemical Co., Ltd.),
· 3-Aminopropyltrimethoxysilane (KBM-903, manufactured by Shin-Etsu Chemical Co., Ltd.),
· Methyltrimethoxysilane (KBM-13, manufactured by Shin-Etsu Chemical Co., Ltd.),
· Diphenyldimethoxysilane (KBM-202SS, manufactured by Shin-Etsu Chemical Co., Ltd.).

### <Filler>

· Hydrophobic calcium carbonate powder (NCC#110, manufactured by Nitto Funka Kogyo K.K., calcium carbonate powder subjected to surface treatment with fatty acid, average particle size 2.1 µm, apparent specific gravity 0.61 g/ml, amount of absorption of DOP 16 ml/100g),
· Fumed silica powder subjected to surface treatment with Dimethylsilicone (another name: polydimethylsiloxane, dimethylpolysiloxane) (AEROSIL RY200, manufactured by Nippon Aerosil Co., Ltd, average particle size 12 nm).

### <Plasticizer>

· Non-functional group type acrylic polymer (ARUFON UP1110, manufactured by Toagosei Co., Ltd., viscosity 3500 mPa·s (25°C), non-functional group type (meth)acrylic polymer, liquid at 25°C),
· Dimethyl sebacate (DMS, manufactured by Hokoku Corporation).

### <Antioxidant>

· Thioether-based antioxidant (ADK STAB AO-26, manufactured by ADEKA Corporation, viscosity 5000 mPa·s (25°C), liquid at 25°C).

Each curable resin composition of Examples 1 to 11 and Comparative Example 1 was prepared. The component (A), the component (C), the silane-based coupling agent having no epoxy group, the plasticizer and the antioxidant were weighed and loaded to a stirring vessel, and the mixture in the stirring vessel was stirred with defoaming in vacuum for 1 hour. Thereafter, the filler was weighed and loaded to the stirring vessel, and the mixture in the stirring vessel was stirred with defoaming in vacuum for 1 hour. Finally, the component (B) was weighed and loaded to the stirring vessel, and the mixture in the stirring vessel was stirred with defoaming in vacuum for 30 minutes. The detailed amount of preparation was according to Table 1. In Table 1, all numerical values are designated by "parts by mass".

### [Table 1]

**(Table 1)**

| Component | Raw material | Example 1 | Example 2 | Example 3 | Example 4 | Example 5 | Example 6 |
|---|---|---|---|---|---|---|---|
| Component (A) | SA110S | 100 | 100 | 100 | 100 | 100 | 100 |
| | SA100S | | | | | | |
| Component (B) | 670 | 6.4 | 6.4 | 2.4 | 3.3 | 6.4 | 6.4 |
| Component (B') | TC-750 | | | | | | |
| Component (C) | KBM-403 | 7.9 | | 7.9 | 7.9 | 7.9 | 7.9 |
| | KBE-402 | | 7.9 | | | | |
| Silane-based coupling agent having no epoxy group | KBM-603 | | | | | | |
| | KBM-903 | | | | | | |
| | KBM-13 | 5.2 | 5.2 | 5.2 | 5.2 | 5.2 | 5.2 |
| | KBM-202SS | | | | 2.4 | | |
| Filler | NCC#110 | 88.1 | 88.1 | 88.1 | 88.1 | 88.1 | 88.1 |
| | RY200 | 14.3 | 14.3 | 11.9 | 14.3 | 14.3 | |
| Plasticizer | UP1110 | | | | | 21.2 | |
| | DMS | 4.3 | 4.3 | 4.3 | 4.3 | 4.3 | 4.3 |
| Antioxidant | AO-26 | 2.6 | 2.6 | 2.6 | 2.6 | 2.6 | 2.6 |
| Total | | 228.8 | 228.8 | 222.4 | 228.1 | 250.0 | 214.5 |

| Component | Raw material | Example 7 | Example 8 | Example 9 | Example 10 | Example 11 | Comparative Example 1 |
|---|---|---|---|---|---|---|---|
| Component (A) | SA110S | 100 | 100 | | | | |
| | SA100S | | | 100 | 100 | 100 | 100 |
| Component (B) | 670 | 6.4 | 6.4 | 3.3 | 3.3 | 6.4 | 3.3 |
| Component (B') | TC-750 | | | | | | |
| Component (C) | KBM-403 | 7.9 | 7.9 | 7.9 | 7.9 | 7.9 | |
| | KBE-402 | | | | | | |
| Silane-based coupling agent having no epoxy group | KBM-603 | | | | | | |
| | KBM-903 | | | | | | 7.9 |
| | KBM-13 | 5.2 | 5.2 | 5.2 | 5.2 | 5.2 | 5.2 |
| | KBM-202SS | | | | 2.4 | | |
| Filler | NCC#110 | 88.1 | 88.1 | 88.1 | 88.1 | 88.1 | 88.1 |
| | RY200 | 4.8 | 9.5 | 14.3 | 14.3 | 14.3 | 14.3 |
| Plasticizer | UP1110 | | | | | 21.2 | |
| | DMS | 4.3 | 4.3 | 4.3 | 4.3 | 4.3 | 4.3 |
| Antioxidant | AO-26 | 2.6 | 2.6 | 2.6 | 2.6 | 2.6 | 2.6 |
| Total | | 219.3 | 224.0 | 225.7 | 228.1 | 250.0 | 225.7 |

Each of the curable resin compositions in Examples 1 to 11 and Comparative Example 1 was subjected to confirmation of storage stability. The results are shown in Table 2.

### [Confirmation of storage stability]

The viscosity of the composition was measured by a desktop capillary rheometer viscometer (RH2000) manufactured by NETZSCH Japan K.K., according to the following measurement conditions, and the resulting value was defined as the "initial viscosity (Pa.s)". The composition was placed in a plastic container, and left to stand in a hot air drying furnace set in an atmosphere at 70°C, for 5 days. Thereafter, the container was taken out from the hot air drying furnace and left to stand at 23°C for 2 hours, thereafter the viscosity of the composition was measured by the same method as the above (the same method as in measurement of "initial viscosity (Pa·s)"), and the resulting value was defined as the "viscosity after leaving to stand (Pa.s)". Calculation was performed by "Percentage of change (%)" = (Viscosity after leaving to stand - Initial viscosity)/Initial viscosity × 100. The percentage of change in viscosity, thus calculated, is not particularly limited, and the percentage of change in viscosity is preferably less than 100% in order that the changes in properties during storage have no influence on coatability. The initial viscosity is not particularly limited, and is preferably 400 Pa·s or less, more preferably 300 Pa·s or less. The viscosity after leaving to stand is not particularly limited, and is preferably less than 800 Pa·s, more preferably 600 Pa·s or less, further preferably less than 600 Pa·s. When the viscosity is 800 Pa·s or less, coatability by a dispenser or the like is more favorable. When the viscosity is 600 Pa·s or less, coatability by a dispenser or the like is further favorable, and when the viscosity is less than 600 Pa·s, coatability by a dispenser or the like is particularly favorable. In Table 2, each of the units of the initial viscosity and the viscosity after leaving to stand is "Pa·s", and the unit of the percentage of change is "%".

### <Measurement conditions>

Capillary die: φ2.0 mm, L32 mm,
Measurement shear rate: 20 s⁻¹,
Measurement temperature: 23°C.

### [Table 2]

**(Table 2)**

| Test item | | Example 1 | Example 2 | Example 3 | Example 4 | Example 5 | Example 6 |
|---|---|---|---|---|---|---|---|
| Storage stability | Initial viscosity | 356 | 300 | 421 | 350 | 221 | 123 |
| | Viscosity after leaving to stand | 566 | 496 | 564 | 557 | 376 | 178 |
| | Percentage of change | 59 | 65 | 34 | 59 | 70 | 45 |
| | | | | | | | |

| Test item | | Example 7 | Example 8 | Example 9 | Example 10 | Example 11 | Comparative Example 1 |
|---|---|---|---|---|---|---|---|
| Storage stability | Initial viscosity | 186 | 252 | 242 | 204 | 149 | 279 |
| | Viscosity after leaving to stand | 273 | 409 | 417 | 320 | 261 | 699 |
| | Percentage of change | 47 | 62 | 72 | 57 | 75 | 151 |

Preparations were performed in Examples 12 to 14 and Comparative Examples 2 to 9. The component (A), the component (C), the silane-based coupling agent having no epoxy group, the plasticizer and the antioxidant were weighed and loaded to a stirring vessel, and the mixture in the stirring vessel was stirred with defoaming in vacuum for 1 hour. Thereafter, the filler was weighed and loaded to the stirring vessel, and the mixture in the stirring vessel was stirred with defoaming in vacuum for 1 hour. Finally, the component (B) (or component (B')) was weighed and loaded to the stirring vessel, and the mixture in the stirring vessel was stirred with defoaming in vacuum for 30 minutes. The detailed amount of preparation was according to Table 3. In Table 3, all numerical values are designated by "parts by mass".

### [Table 3]

**(Table 3)**

| Component | Raw material | Example 12 | Example 13 | Example 14 | Comparati ve Example 2 | Comparati ve Example 3 | Comparati ve Example 4 |
|---|---|---|---|---|---|---|---|
| Component (A) | SA110S | 100.0 | 100.0 | 100.0 | | 100.0 | 100.0 |
| | SA100S | | | | 100.0 | | |
| Component (B) | 670 | 6.5 | 6.5 | 6.5 | 3.6 | 6.5 | 6.5 |
| Component (B') | TC-750 | | | | | | |
| Component (C) | KBM-403 | 2.6 | 5.2 | 7.8 | | | |
| | KBE-402 | | | | | | |
| Silane-based coupling agent having no epoxy group | KBM-603 | | | | | 1.3 | 7.8 |
| | KBM-903 | | | | 2.7 | | |
| | KBM-13 | 5.2 | 5.2 | 5.2 | 5.5 | 5.2 | 5.2 |
| | KBM-202SS | | | | 2.3 | | |
| Filler | NCC#110 | 89.1 | 89.1 | 89.1 | 106.1 | 89.1 | 89.1 |
| | RY200 | 19.6 | 19.6 | 19.6 | 9.1 | 19.6 | 19.6 |
| Plasticizer | UP1110 | | | | 18.2 | | |
| | DMS | 4.3 | 4.3 | 2.2 | 4.5 | 2.2 | 2.2 |
| Antioxidant | AO-26 | 2.6 | 2.6 | 2.6 | 2.7 | 2.6 | 2.6 |
| Total | | 230.0 | 232.6 | 233.0 | 254.7 | 226.5 | 233.0 |
| | | | | | | | |

| Component | Raw material | Comparative Example 5 | Comparative Example 6 | Comparative Example 7 | Comparati ve Example 8 | Comparati ve Example 9 | |
|---|---|---|---|---|---|---|---|
| Component (A) | SA110S | 100.0 | 100.0 | 100.0 | 100.0 | 100.0 | |
| | SA100S | | | | | | |
| Component (B) | 670 | | | | | | |
| Component (B') | TC-750 | 6.5 | 6.5 | 6.5 | 6.5 | 6.5 | |
| Component (C) | KBM-403 | 1.3 | 2.6 | 7.8 | | | |
| | KBE-402 | | | | | | |
| Silane-based coupling agent having no epoxy group | KBM-603 | | | | 1.3 | 7.8 | |
| | KBM-903 | | | | | | |
| | KBM-13 | 5.2 | 5.2 | 5.2 | 5.2 | 5.2 | |
| | KBM-202SS | | | | | | |
| Filler | NCC#110 | 89.1 | 89.1 | 89.1 | 89.1 | 89.1 | |
| | RY200 | 19.6 | 19.6 | 19.6 | 19.6 | 19.6 | |
| Plasticizer | UP1110 | | | | | | |
| | DMS | 2.2 | 2.2 | 2.2 | 2.2 | 2.2 | |
| Antioxidant | AO-26 | 2.6 | 2.6 | 2.6 | 2.6 | 2.6 | |
| Total | | 226.5 | 227.8 | 233.0 | 226.5 | 233.0 | |

In Examples 1 and 12 to 14 and Comparative Examples 2 to 9, measurement of the hardness, measurement of the tensile strength, measurement of the percentage of elongation, measurement of the tensile shear adhesion strength, and confirmation of the storage stability (simple) were performed. The results are shown in Table 4.

### [Measurement of hardness]

The composition was applied to a mold having a thickness of 1 mm, and left to stand under an atmosphere at 23°C and 50% RH for 7 days to produce a cured product. Six of the resulting sheet-shaped cured products were stacked to produce a layered product, and a durometer hardness tester (JIS-A) was used to push a hardness meter toward the layered product at a pressure applied of 10 N, thereby measuring the maximum value of the hardness as "hardness (unit: none)". The detail of the measurement method was according to JIS K 6249: 2003. The hardness is not particularly limited, and the hardness is preferably A40 or less in order to maintain more favorable tensile shear adhesion strength described below.

### [Measurement of tensile strength, and measurement of percentage of elongation]

The composition was applied to a mold having a thickness of 1 mm, and left to stand under an atmosphere at 23°C and 50% RH for 7 days to produce a cured product. A test piece of a shape of dumbbell No. 5 was cut out from the resulting sheet-shaped cured product. The test piece was pulled at 500 mm/min by a tensile tester at a distance between baselines of 25 mm, and the distance between baselines until breakage of the dumbbell was measured. Calculation was performed by a calculation formula (Distance between baselines at breakage - Initial distance between baselines)/Initial distance between baselines × 100, thereby not only calculating the "percentage of elongation (%)", but also calculating the "tensile strength (MPa)" from the maximum strength of the dumbbell. The detail of the measurement method was according to JIS K 6249: 2003. The tensile strength and the percentage of elongation are not each particularly limited, and the tensile strength is preferably 1.0 MPa or more and the percentage of elongation is preferably 150% or more in consideration of followability of the cured product to the adherend.

### [Measurement of tensile shear adhesion strength]

An aluminum member of 25 mm width × 100 mm length × 1 mm thickness was prepared, and two such members were attached and fixed to each other at an adhesion area of 10 mm × 25 mm (clearance 1 mm) by the composition, to produce a test piece before curing. The test piece before curing was left to stand under an atmosphere at 23°C and 50% RH for 7 days to cure the composition in the teat piece before curing, thereby producing a test piece. The test piece was pulled at 50 mm/min by a tensile tester, and the "initial tensile shear adhesion strength (initial adhesion strength) (MPa)" was calculated from the resulting maximum strength. The release state ("initial release state") was visually confirmed according to the following evaluation criteria. The detail of the measurement method was according to JIS K 6249: 2003. The initial tensile shear adhesion strength (initial adhesion strength) is not particularly limited, and is preferably 0.7 MPa or more in consideration that release from the adherend is further less likely to occur.

The test piece which was in the state of being immersed in an aqueous solution containing 50% by volume of Toyota genuine Super Longlife Coolant (another name: Super LLC) handled by dealers of Toyota Motor Corporation was left to stand at 120°C for 240 hours. Thereafter, the test piece was taken out and the immersion liquid was wiped off, and the test piece was left to stand at 23°C for 2 hours, and thereafter the tensile shear adhesion strength was measured by the same method as the above (the same method as in measurement of "initial adhesion strength (MPa)"), to calculate the "tensile shear adhesion strength after immersion (adhesion strength after immersion) (MPa)" from the resulting maximum strength. The "release state" ("release state after immersion") was visually confirmed according to the following evaluation criteria. The shear adhesion strength after immersion (adhesion strength after immersion) is not particularly limited, and is preferably 0.7 MPa or more.

Calculation was performed by a calculation formula "Percentage of change = (Adhesion strength after immersion - Initial adhesion strength)/Initial adhesion strength × 100", and thus the "percentage of change (%)" was calculated. For the percentage of change in adhesion strength, thus calculated, lower is more preferable, and 50% or less is a favorable result. The percentage of change in adhesion strength is, for example, preferably 30% or less, more preferably 25% or less, further preferably less than 25%, further preferably 20% or less, particularly preferably 15% or less, but not limited thereto.

When the release state is rated as "∘" and the percentage of change in adhesion strength is 50% or less, adhesiveness is favorable and sealability against the immersion liquid can be favorably maintained. In the evaluation, a case where the initial release state and the release state after immersion were each rated as "∘" and the percentage of change in adhesion strength was 50% or less was determined as a favorable result where the cured product exhibited high adhesiveness to the adherend and high resistance to a coolant.

### <Evaluation criteria of release state>

∘: cohesive failure on 50% or more and 100% or less of release surface,
△: cohesive failure on more than 0% and less than 50% of release surface,
×: interfacial failure on whole release surface.

Here, in ∘ rating and △ rating, a part other than the cohesive failure part of release surface was interfacial failure.

Also in Examples 2 to 11, the initial release state and the release state after immersion were confirmed and the percentage of change was calculated by the same methods as described above. In Examples 2 to 11, both the initial release state and the release state after immersion were rated as "∘", and the percentage of change was 50% or less.

### [Confirmation of storage stability (simple)]

The viscosity of the composition was measured by use of a TV-33 model viscometer (EHD model) manufactured by Tokisangyo, according to the following measurement conditions, and the resulting value was defined as the "initial viscosity (Pa.s)". The composition was placed in a plastic container, and left to stand in a hot air drying furnace set in an atmosphere at 70°C, for 5 days. Thereafter, the container was taken out from the hot air drying furnace and left to stand at 25°C for 1 hour, thereafter the viscosity of the composition was measured by the same method as the above (the same method as in measurement of "initial viscosity (Pa·s)"), and the resulting value was defined as the "viscosity after leaving to stand (Pa·s)".

### <Measurement conditions>

Cone rotor: 3° × R14,
Rate of rotation: 0.5 to 2.5 rpm (rate of rotation varied depending on viscosity.),
Measurement time: 3 minutes,
Measurement temperature: 25°C.

Calculation was performed by a calculation formula "Percentage of change (%)" = (Viscosity after leaving to stand - Initial viscosity)/Initial viscosity × 100, and storage stability was evaluated according to the following evaluation criteria. The percentage of change in viscosity, thus calculated, is not particularly limited, and the percentage of change in viscosity is preferably rated as "∘" in order that properties during application by a dispenser after storage are favorable.

### <Evaluation criteria of percentage of change (percentage of change in viscosity)>

∘: less than 100%,
×: 100% or more.

In Table 4, the unit of the tensile strength is MPa, the unit of the percentage of elongation is %, each of the units of the initial adhesion strength and the adhesion strength after immersion is MPa, and the unit of the percentage of change is %.

### [Table 4]

**(Table 4)**

| Test item | | Example 1 | Example 12 | Example 13 | Example 14 | Comparative Example 2 | Comparative Example 3 |
|---|---|---|---|---|---|---|---|
| Hardness | | A30 | A25 | A29 | A33 | A26 | A30 |
| Tensile strength | | 1.2 | 1.4 | 1.4 | 1.4 | 1.0 | 1.7 |
| Percentage of elongation | | 241 | 296 | 288 | 240 | 250 | 228 |
| Tensile shear adhesion strength | Initial adhesion strength | 1.0 | 1.1 | 1.0 | 1.0 | 1.0 | 1.2 |
| | Initial release state | ○ | ○ | ○ | ○ | × | ○ |
| | Adhesion strength after immersion | 1.2 | 1.3 | 1.3 | 1.2 | 1.4 | 2.1 |
| | Release state after immersion | ○ | ○ | ○ | ○ | △ | ○ |
| | Percentage of change | 20 | 14 | 24 | 25 | 40 | 78 |
| Storage stability (simple) | | ○ | ○ | ○ | ○ | × | × |
| | | | | | | | |

| Test item | | Comparative Example 4 | Comparative Example 5 | Comparative Example 6 | Comparative Example 7 | Comparative Example 8 | Comparative Example 9 |
|---|---|---|---|---|---|---|---|
| Hardness | | A36 | A40 | A40 | A39 | A41 | A44 |
| Tensile strength | | 1.9 | 1.6 | 1.7 | 1.6 | 1.9 | 2.2 |
| Percentage of elongation | | 204 | 248 | 244 | 212 | 232 | 200 |
| Tensile shear adhesion strength | Initial adhesion strength | 1.1 | 1.3 | 1.3 | 1.2 | 0.9 | 0.3 |
| | Initial release state | × | ○ | × | × | ○ | × |
| | Adhesion strength after immersion | 3.2 | 1.8 | 1.7 | 1.4 | 1.6 | 2.4 |
| | Release state after immersion | Δ | Δ | Δ | Δ | Δ | Δ |
| | Percentage of change | 193 | 33 | 32 | 16 | 82 | 716 |
| Storage stability (simple) | | × | ○ | ○ | ○ | ○ | ○ |

It was confirmed from Table 3 and Table 4 that the cured products obtained by curing the curable resin compositions according to Examples were enhanced in resistance to a coolant with reference to the release state as compared with the cured products obtained by curing the curable resin compositions according to Comparative Examples.

The organozinc catalyst as the component (B) and 3-glycidoxypropyltrimethoxysilane as the component (C) were used in the curable resin compositions according to Examples 1 and 12 to 14. The cured products obtained by curing the curable resin compositions according to Examples 1 and 12 to 14 and the cured products obtained by curing the curable resin compositions according to Comparative Examples 2 to 9 were not largely different in terms of the hardness, the tensile strength and the percentage of elongation. However, it was confirmed from the evaluation result of the tensile shear adhesion strength, in particular, the evaluation results of the release state and the percentage of change that the cured products obtained by curing the curable resin compositions according to Examples 1 and 12 to 14 exhibited favorable results in terms of both the resistance to a coolant and the storage stability, unlike the cured products obtained by curing the curable resin compositions according to Comparative Examples 5 to 9 in which an organotitanium catalyst was used instead of the component (B) and the cured products obtained by curing the curable resin compositions according to Comparative Examples 2 to 4 in which the component (C) was not used and the coupling agent other than the silane-based coupling agent having an epoxy group was used.

Aluminum was used as the adherend with respect to the evaluation results of the tensile shear adhesion strength. From this, it was confirmed that the effects of the present invention were exhibited by the curable resin compositions according to Examples, even in the case of a material commonly hardly adhering.

### Industrial Applicability

A cured product according to one aspect of the present invention exhibits high resistance to a coolant. A curable resin composition according to one aspect of the present invention is suitable for an application in which a coolant is sealed. The application in which a coolant is sealed corresponds to use in severe conditions for a sealant in contact with a coolant. It has been conventionally known that, in the application, degradation of sealability is easily caused by, for example, release of a cured product of a sealant from an adherend, or degradation of a cured product of a sealant. It has been known that leakage of a liquid (coolant) is consequently easily caused. However, a sealant according to one aspect of the present invention can also be stably used in such an important section.

The present application is based on Japanese Patent Application No. 2022-199240 filed on December 14, 2022, the disclosure of which is incorporated by reference in its entirety.

## Claims

1. A curable resin composition comprising components (A) to (C):
component (A): a polymer which has, as a main chain, a polymer of a monomer containing a (meth)acrylic monomer and which has a hydrolyzable silyl group in its molecule,
component (B): an organozinc catalyst, and
component (C): a silane-based coupling agent having an epoxy group.

2. The curable resin composition according to claim 1, wherein the hydrolyzable silyl group in the component (A) is a dialkoxysilyl group.

3. The curable resin composition according to claim 1, further comprising a coupling agent other than the silane-based coupling agent having an epoxy group.

4. The curable resin composition according to claim 3, wherein the composition comprises 1 to 20 parts by mass of the component (C) and 5 to 25 parts by mass of the coupling agent other than the silane-based coupling agent having an epoxy group, based on 100 parts by mass of the component (A).

5. The curable resin composition according to claim 1, further comprising a filler.

6. The curable resin composition according to claim 5, wherein the composition comprises 50 to 150 parts by mass of the filler based on 100 parts by mass of the component (A).

7. The curable resin composition according to claim 1, further comprising a plasticizer.

8. The curable resin composition according to claim 7, wherein the composition comprises 1 to 30 parts by mass of the plasticizer based on 100 parts by mass of the component (A).

9. A sealant comprising the curable resin composition according to claim 1.

10. A cured product obtained by curing the curable resin composition according to any one of claims 1 to 8 or the sealant according to claim 9.
